# EUROPEAN PATENT SPECIFICATION

(11) **EP 3 090 900 B1**
(45) Date of publication and mention of the grant of the patent: **29.09.2021**
(21) Application number: 15166757.3
(22) Date of filing: 07.05.2015
(51) Int. Cl.: B60Q 1/32, B60Q 1/24

(54) **METHOD AND VEHICLE ILLUMINATION SYSTEM FOR CONTROL OF VEHICLE LIGHTS**
VERFAHREN UND FAHRZEUGBELEUCHTUNGSSYSTEM ZUR STEUERUNG VON FAHRZEUGBELEUCHTUNG
PROCÉDÉ ET SYSTÈME D'ÉCLAIRAGE DE VÉHICULE POUR COMMANDER DES FEUX D'UN VÉHICULE

(43) Date of publication of application: 09.11.2016
(73) Proprietor: Volvo Car Corporation, 40531 Göteborg (SE)
(72) Inventor: Klit Olesen, Anna, 2000 Fredriksberg (DK); Lohse, Henrik, 3060 Espergærde (DK)
(74) Representative: Valea AB

(56) References cited:
- DE-A1-102008 063 564
- DE-A1-102012 020 414
- DE-A1-102013 001 086
- FR-A1- 2 929 193
- US-A1- 2014 218 212

## Description

### Technical field

The present invention relates generally to a vehicle illumination system for controlling the operation of external vehicle lights.

### Background art

In prior art it is known to illuminate the area around the vehicle when a driver is about to enter the vehicle. This type of illumination is called welcome light.

See for example DE102012020414A1 which presents a method or a device carrying out detection of a person in the surrounding of a motor vehicle, and determining detection areas based on actual person position. Illumination devices corresponding to the respective detection area is activated, when a person is detected in the detection area and when a signal from a vehicle key or similar is detected.

Document D1, US 20140218212 A1, relates to a vehicle puddle lamp lighting system for the exterior of a vehicle that includes a housing, a sensor, a lamp assembly, and a controller. The sensor is carried by the housing and detects the presence of a hazard in a predetermined region on the ground adjacent to the vehicle. The lamp assembly is carried by the housing and has a light source for projecting light onto at least a portion of the region. The controller is coupled to the sensor and the lamp assembly. The controller has a light activation input and, upon receipt of a light activation command at the input, it controls the lamp assembly to project light from the lamp assembly of a first color or other visible characteristic when no hazard is detected by the sensor and of a second color or other visible characteristic when the hazard is detected by the sensor.

Document D2, DE 102013001086 A1, relates to a motor vehicle, comprising a plurality of the illumination of the lateral or rear vehicle surroundings serving lamps, wherein one or more sensors (8) for detecting the position of a person (P) relative to the vehicle (1) are provided, and that the lighting means (3, 4, 5), several of which are in the region of a vehicle side or rear of the vehicle installed and the different environment areas (I, II, III) illuminate, separately are controllable in dependence on the detected position.

Document D3, FR 2929193 relates to a device having a set of position sensors (6), sensitive to the presence of a user (8) e.g. driver or passenger, in an area covered by a sensor sensitivity field interesting the area in a manner to control lighting and/or extinction of a set of different light sources equipping a motor vehicle and to optimally illuminate the area. The light sources are constituted by intersection headlights of front illuminating searchlights (3, 4), a direction headlamp or backup light (7) and front or rear turn signal lamp.

It is also known systems for controlling the operation of automobile lamps where a parking environment and obstacles existing near the automobile is recognized and automotive lamps are turned on on the basis of such a recognition, see for example EP2711244A2. However, here lamps are turned on in those areas free from obstacles in order to enlighten only the area from which the driver most probably will appear.

A drawback with the known prior art is that the welcome light is faint and only used to guide the driver or passengers to or from the vehicle. In order to save energy, only the area outside the door the person or persons is about to enter or exit from is illuminated. Thus, when stepping out of the faintly illuminated area outside the door the vision is quickly deteriorating and the person cannot see if he is about to step into a puddle of water, mud or some other obstacles next to the car. Further, there might be other objects near the vehicle that need to be noticed. For example, broken glass or other obstacles, which may cause puncture or damage to the vehicle.

### Summary of invention

An object of the present invention is to enable a control of vehicle exterior lights which make the parking, entering and exiting of a vehicle more safe and pleasant.

The invention provides a method for controlling the operation of a vehicle illumination unit as defined in the appended claim 1.

The method according to the invention ensures that objects present within a certain area surrounding the vehicle will be properly illuminated. Since the both the presence and position of objects are detected a light source can be directed to illuminate the specific object or objects near the vehicle with a specific light that clearly draw the driver's or passenger's attention to the objects. Thus, the driver or passenger can chose to avoid contact with the object when entering or exiting the vehicle.

According to one embodiment, the method further comprises:
- Receiving a second signal from a second detection unit indicating the intensity of the ambient light
- Determining if the intensity of the ambient light is below a predefined value
- Communicating an activation signal to the vehicle illumination unit to illuminate the detected objects with a light having third light characteristic if said intensity of the ambient light is below the predefined value.

According to another embodiment, the method further comprises:
- Receiving a signal from a third detection unit indicating the presence and position of person or persons present in the vehicle and about to exit said vehicle
- Communicating an activation signal to the vehicle illumination unit to illuminate the peripheral area surrounding the vehicle in the vicinity of the position of the detected person or persons with a light having a second light characteristics if a person is about to exit said vehicle.

According to another embodiment, the method further comprises:
- Communicating an activation signal to a communication device to visualize presence of object on a screen if object is detected.

The invention also provides a vehicle illumination system for controlling the operation of an illumination unit as defined in the appended claim 5.

According to one embodiment, said system is further arranged to:
- Receive, in a vehicle data collection and communication unit, a second signal from a second detection unit indicating the intensity of the ambient light
- Determine, by the determination unit, if the intensity of the ambient light is below a predefined value
- Communicate, by the vehicle data collection and communication unit, an activation signal to the vehicle illumination unit to illuminate the detected objects with a light having third light characteristic if said intensity of the ambient light is below the predefined value.

According to another embodiment, said system is further arranged to:
- Communicate, by a vehicle data collection and communication unit, an activation signal to a communication device to visualise presence of object on a screen if object is detected.

According to another embodiment, a computer program is provided, comprising computer readable code means, which when run in a vehicle illumination system according to the invention cause the vehicle illumination system to perform the method according to the invention.

According to another embodiment a computer program product is provided, comprising a computer readable medium and a computer program as defined above,
wherein the computer program is stored on the computer readable medium.

According to another embodiment a vehicle is provided comprising a vehicle information system according to the invention.

Additional technical features and corresponding advantages of the above mentioned method, system, computer program and computer program product will be discussed in further detail in the following.

### Brief description of drawings

The invention is now described, by way of example, with reference to the accompanying drawings, in which:
Fig. 1 shows a perspective view of a vehicle comprising an illumination system according to the invention.
Fig. 2 is a vehicle comprising an illumination system according to the invention.
Fig. 3 is a flow chart illustrating a procedure in a vehicle illumination system.
Fig. 4 are additional flow charts illustrating embodiments of the procedure in the vehicle illumination system.
Fig. 5 illustrates example embodiments of a vehicle illumination system.
Fig. 6 shows a further example of a vehicle illumination system.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

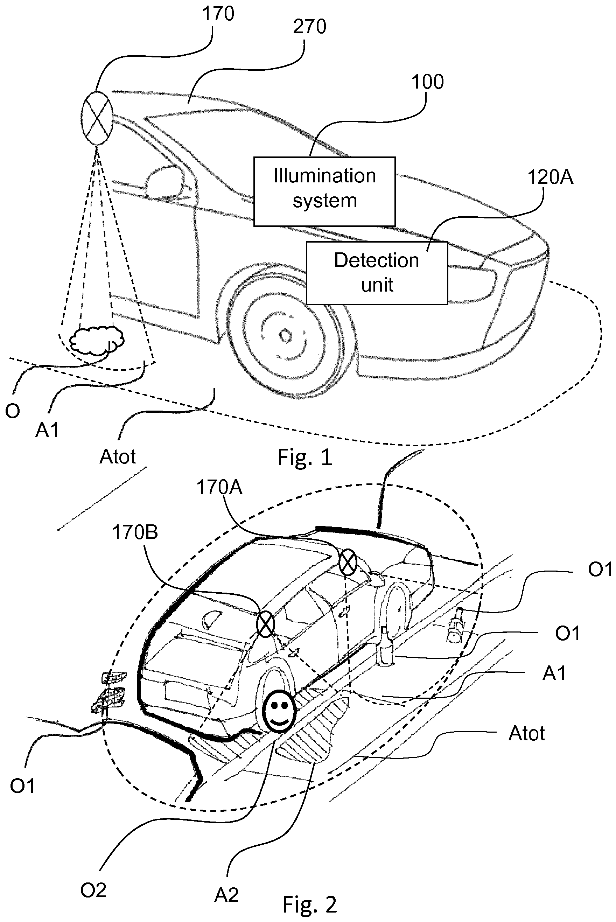

Fig.1 shows a perspective view of a vehicle 270 comprising an illumination system 100 for controlling the operation of an external illumination unit 170 adapted to illuminate an object O arranged in a peripheral area Aₜₒₜ of the vehicle. The presence and position of the object O is detected by a first detection unit 120A. In one embodiment the system also illuminates a first area A₁ at least partly surrounding the object O. The vehicle information system 100 may comprise one of e.g. the following: a IHU (Infotainment Head Unit), a TEM (Telematics Module), a CEM (Central Electronic Module) or an ECU (Electronic Control Module).

Fig. 2 shows a vehicle 270 comprising the illumination system 100 for controlling the illumination unit 170. The illumination unit 170 may comprise one or several vehicle light sources 170A, 170B, etc arranged to illuminate and area Atot in the surroundings of the vehicle in vicinity of the vehicle. The vehicle light sources may be mounted in or on the vehicle chassis. The light sources may be able to emit light having different light characteristics, such as different intensity, color or frequency. The illumination system 100 may be adapted to detect presence of object or objects of a first type O1 or a second type 02 in a peripheral area Atot and to illuminate said objects. The first type of objects O1 are objects which may annoy, harm or damage a driver, passenger or the vehicle 270 itself, for example broken glass, a puddle of water, a layer of ice or a pile of mud or other obstacles. The second type of object 02, is a person or human being about to enter the vehicle. The second type of object 02 may also be another person or animal present in the peripheral area Atot near the vehicle.

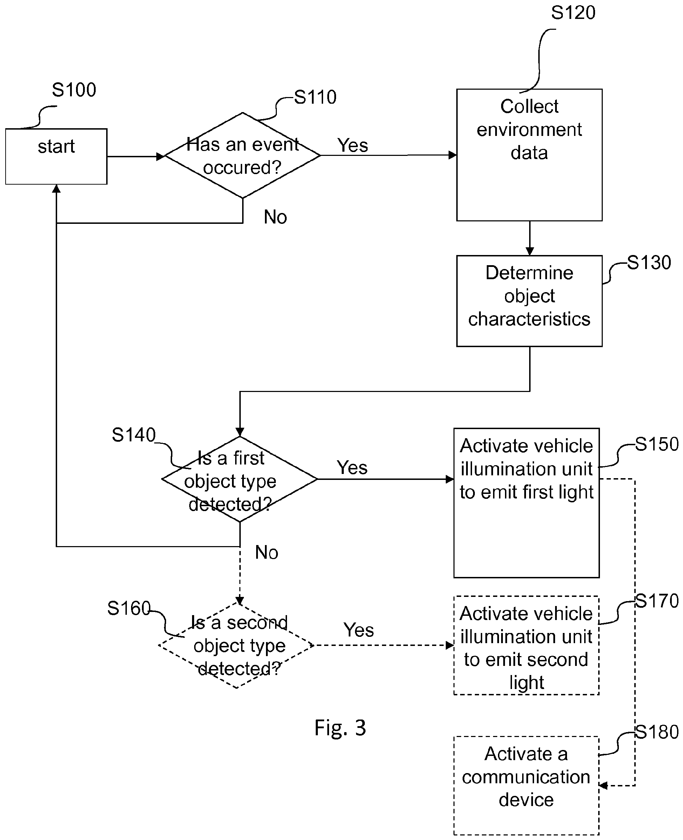

A procedure or method in a vehicle illumination system 100 for controlling the operation of external vehicle lights illuminating a peripheral area of a vehicle 270 will now be described with reference to Fig. 3. In a first step S100, the method is initiated. In other step S110 the occurrence of an event is detected. According to one embodiment, an event might be turning the vehicle ignition key. According to another embodiment, an event might be that the driver arriving to, exiting or is in a close proximity to the vehicle. This may be detected by detecting the presence of a key fob or other portable electrical devices or wearables such as for example a smart phone. According to one embodiment, the event is the manual switching of a control switch in the vehicle 270. According to one embodiment, the event is activation of an application in a mobile device, for example a smart phone. If an event has occurred, another step S120 is initiated. The step S120 is to detect and collect environmental data received as a first signal from a first detection unit 120A in a vehicle data collection and communication unit 160. The data may for instance be received from detection unit 120A either by wire, or wirelessly, via for example CAN-bus (Controller Area Network) WiFi/Wireless Local Area Network (WLAN), Bluetooth, Radio Frequency Identification (RFID), ZigBee not limiting to other wireless communication means suitable for short or media range wireless communication. The first signal indicates the presence of object or objects 01,02 in a peripheral area Atot surrounding the vehicle. The first detection unit 120A may be a camera system or an image acquisition system such as a parking sensor, ultra sound sensor, infrared sensor, automatic parking device or other devices. In another embodiment the detection unit 120A may be a reflection light sensor scanning the surroundings to detect areas with different reflection which might be a puddle of water, mud or an ice cover. The camera system or image acquisition system may enable the acquisition of an image or images of objects or obstacles in vicinity of the vehicle possible to use to determine the position of the objects within said peripheral area Atot. In a further step S130 the characteristics of the objects is determined by a determination unit 160 by analyzing the signals from the detections unit 120A. In one embodiment said characteristics is basically the position of the object. In a further step 140 the objects are determined to be of a first object type O1. In one embodiment this determination is made via for instance an image processing or recognition step in the camera system or another system, the characteristics of the objects, such for example size, shape and color, may be identified, whereby the object data may be provided and further transmitted to the vehicle illumination system 100. According to one embodiment, the determination may be performed by an image processing step comparing the processed images with images forming a part of a predefined road environment or belong within a group of obstacles or road irregularities having predefined characteristics, and/or other preferences. The information of which may be data saved in a database 150. If the objects are defined to be of the first type, a further step S150 is performed. Said step S150 activates an illumination unit 170 to illuminate said objects O1 with a light having first light characteristics. In one embodiment a first area A1 at least partly surrounding said object O1 is also illuminated.

In one embodiment the method includes a further step S160, determining if the detected object is of a second object type 02. The second object type is a person or human being detected to be present or enter in the area Atot surrounding the vehicle. When a second object type 02 is detected a further step S170 is activated. In step 170 an activation signal is communicated to the vehicle illumination unit 170 with the order to illuminate said objects 02 with a light having second light characteristics. In one embodiment a second area A2 at least partly surrounding said object 02 is also illuminated. The second area A2 is in one embodiment larger that the first area A1.

Said second light characteristics are different from the first light characteristics of step S150. In one embodiment a light having a first light characteristics is a light with for example a different color, a higher intensity or is emitted with a different frequency than a light having the second light characteristics. This in order to further mark the position of objects of the first type O1 near the vehicle which may annoy, harm or damage a driver, passenger or the vehicle 270 itself. A light with a second light characteristics is in one embodiment a light with a comparably low intensity adapted to illuminate the ground within an area, in vicinity of the vehicle, surrounding the detected person. The second light may be considered to be only a lead light for a person entering or exiting the vehicle. It shall be noted that both object type O1 and O2 may in one embodiment be illuminated simultaneously.

In a further step S180 the system is used to communicate, by the collection and communication unit 130, an activation signal to a communication device 180 to visualize presence of object O, O1, O2 on a screen if an object or objects O, O1, O2 are detected. Said communication device may be a CSD centre stack display, a mobile device such as a phone or computer or similar device. On said screen a driver, passenger or other person may be alerted that an object of a specific type is detected in the surroundings of the vehicle. In one embodiment the position of the object or objects are visualized on the screen and in a further object an image of the object is visible. The image may be a real time photo of the object or a stylized image showing a graphical image of the object type.

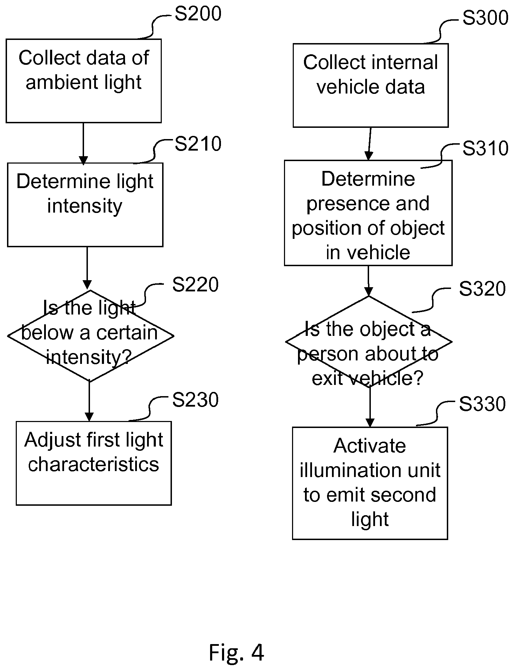

A further procedure or method in a vehicle illumination system 100 for controlling the operation of external vehicle lights illuminating a peripheral area of a vehicle 270 will now be described with reference to Fig. 4. This is a method where steps S200 and S300 is used to collect further input data from a second and third detection unit 120B, 120C. Said data is determined to be of a specific type or within a specific interval in steps S210, S220 and S310, 320. In a final step S230, S330 the light characteristics of the light emitted from the illumination unit illuminating object is adjusted or activated. In one embodiment data about ambient light is received as a signal from a second detection unit 120B. The second signal indicates the intensity of the ambient light and said second detection unit 120B may be a luminosity or light sensor or a camera unit. If the detected ambient light intensity is determined to be below a certain predefined value, the intensity or light characteristics of the light is adjusted in order to further mark the position of objects of the first type O1 near the vehicle which may annoy, harm or damage a driver, passenger or the vehicle 270 itself. In one embodiment the data is received as a third signal from a third detection unit 120C. The third signal indicating the presence and position of an object of second type 02, i.e. a person or persons present in the vehicle and about to exit said vehicle. Said third detection unit 120C may be a key fob or other electrical portable devices, door lock or door handle sensor indicating that door is opened, or a pressure detection device arranged in at least one of the vehicle seats, an infrared device or a seatbelt sensor device. When an object of the second type 02 is detected to exit the vehicle, an activation signal is communicated to the vehicle illumination unit 170 to illuminate a portion of the peripheral area Aₜₒₜ surrounding the vehicle in the vicinity of the position of the detected person or persons with a light having a second light characteristics. Said portion is in one embodiment the second area A2. I.e. the area in which the person in the vehicle is about to exit to is illuminated with for example a lead light or similar light with a lower intensity or other light characteristics than the light illuminating an object of the first type O1.

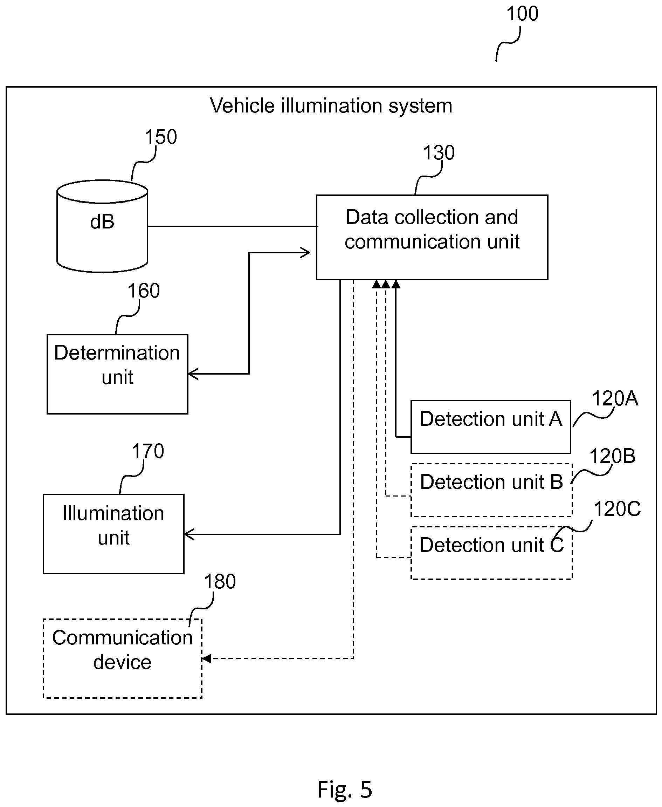

Fig. 5 discloses an illumination system 100 for controlling the operation of an external vehicle illumination unit 170. The system 100 is arranged to receive data, via a vehicle data collection and communication unit 130, about the presence and characteristics of objects O1, 02 detected in an area Aₜₒₜ surrounding the vehicle, by a first detection unit 120A. The system may further arranged to receive data, via the collection and communication unit 130, about surrounding ambient lights detected by a second detection unit 120B. The system may further be arranged to receive data about the presence of an object of a second type 02, i.e. a person, present in the vehicle by a third detection unit 120C. In one embodiment the first detection unit 120A detecting the presence and position of an objects O1, 02 is a camera, infrared or ultra sound scanner or other optical device creating a fictive image of the surroundings possible to analyze. In another embodiment the detection unit 120A may be a reflection light sensor scanning the surroundings to detect areas with different reflection which might be a puddle of water, mud or an ice cover. In one embodiment the second detection unit 120B detecting the ambient light is a luminosity or light sensor. In another embodiment the third detection unit 120C may be a key fob, door lock or door handle sensor indicating that door is opened, or a pressure detection device arranged in at least one of the vehicle seats, an infrared device or a seatbelt sensor device. The database 150 may be arranged for storage of sensor data and/or data of objects determined to be of a first or second type. Objects of the first type O1 may be defined to be dangerous or unpleasant for the driver, for example broken glass, a puddle of water or a pile of mud and the data saved may be information of predetermined size, shape, color or refection. The database may also be arranged to store vehicle data, historical data, statistical data, configuration data, pre configuration data, or other type of data. The database 150 may be based on a flash type of memory, disk drive of memory, virtual memory provided by a network access, not limiting to other types of storages. A determination unit 160 is arranged to determine if said stationary objects are dangerous or unpleasant for the driver or vehicle, by analyzing said data detected by the detection units 120A, 120B, 120C, separate or together. The determination unit 160 may be arranged to determine which objects that need to be illuminated and to request, via the collection and communication unit 130, the activation of an illumination unit 170 adapted to illuminate the objects detected within said scanned area Aₜₒₜ. In an embodiment the illumination unit is one or more light sources arranged to light up the area surrounding the vehicle. Each light source may be adapted to emit light with different intensity/brightness/color in order to differently illuminate objects depending on for example detected outside light, for example no illumination when full daylight or only extra strong illumination of objects when full daylight. In one embodiment it is also possible to vary the characteristics or the emitted light depending on objects detected. I.e. the emitted light characteristics may depend on if the object detected is of a first or second type or possible also if it is an object determined to be of a specific importance, which for example may seriously hurt the driver or damage the vehicle. It is also possible to specially illuminate objects that self may be hurt by the vehicle, for example a child or an animal.

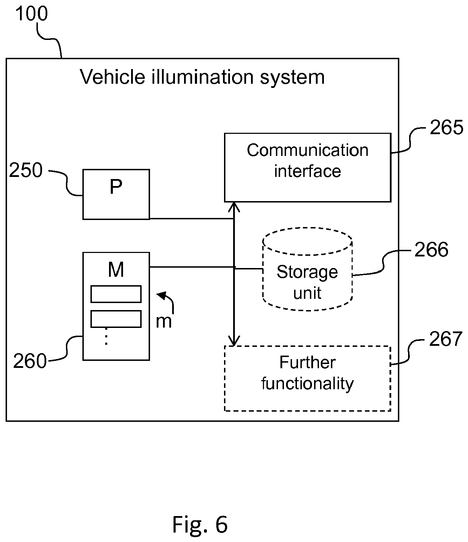

Fig. 6 shows an illustration of embodiments of a vehicle illumination system 100. The vehicle illumination system 100 may be implemented, by means of program modules of a respective computer program comprising code means which, when run by a processing unit 250 causes the vehicle illumination system 100 to perform the above-described actions. The processing unit 250 may comprise a single Central Processing Unit (CPU), or could comprise two or more processing units. For example, the processing unit 250 may include general purpose microprocessors, instruction set processors and/or related chips sets and/or special purpose microprocessors such as Application Specific Integrated Circuits (ASICs). The processing unit 250 may also comprise a storage for caching purposes.

Each computer program may be carried by a computer program product 260 in the vehicle illumination system 100, shown in Fig. 1, 2, 3, 4 and 5 in the form of a memory having a computer readable medium and being connected to the processing unit 250. The computer program product 260 or memory thus comprises a computer readable medium on which the computer program is stored e.g. in the form of computer program modules "m". For example, the memory 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the vehicle illumination system 100.

The vehicle illumination system 100 may further comprise a communication interface 265. The communication interface 265 may also be arranged to communicate with for example a vehicle specific parking detection system, a vehicle to vehicle communication network or vehicle internal or external communication devices such as an information screen, mobile communication device, computer or computer network. In an embodiment the communication interface 265 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11 (Institute of Electrical and Electronics Engineers), including but not limited to 802.11 a/b/n or other similar forthcoming standards. The communication interface 265 may comprise an antenna. The communication interface 265 may be connectable to an external antenna. The illumination system 100 may further comprise one or more storage units 266 and further functionality 267 useful for the vehicle information system 100 to serve its purpose as a vehicle illumination system, such as power supply, internal communications bus, internal cooling, database engine, operating system, not limiting to other functionalities.

A preferred embodiment of vehicle illumination system according to the invention has been described. However, the person skilled in the art realizes that this can be varied within the scope of the invention defined by the appended claims.

## Claims

1. Method performed by a vehicle illumination system (100) for controlling the operation of a vehicle illumination unit (170), said method comprising:
- Receiving an initiating signal declaring occurrence of an event
- Receiving a first signal from a first detection unit (120A) indicating the presence and position of an object or objects (O) in a peripheral area (Aₜₒₜ) surrounding the vehicle, up on the occurrence of the event **characterised in that** the method further comprises:
- Determining object characteristics: if said object or objects (O) is/are of a first object type (O1) forming a part of a predefined road environment except a person or belonging within a group of obstacles or road irregularities having predefined characteristics, then
- Communicating an activation signal to the vehicle illumination unit (170) to illuminate said object or objects (O1) with a light having first light characteristics if the object or objects (O) detected is/are of the first object type (O1), if said object or objects (O) is/are of a second object type (O2) defined as a person, then
- Communicating an activation signal to the vehicle illumination unit (170) to illuminate said object or objects (O) with a light having second light characteristics if the object or objects (O) detected is/are of the second object type (O2).

2. The method according to claim 1, further comprising:
- Receiving a second signal from a second detection unit (120B) indicating the intensity of the ambient light
- Determining if the intensity of the ambient light is below a predefined value
- Communicating an activation signal to the vehicle illumination unit (170) to illuminate the detected objects (O, O1, O2) with a light having third light characteristic if said intensity of the ambient light is below the predefined value.

3. The method according to any of the above claims, further comprising:
- Receiving a signal from a third detection unit (120C) indicating the presence and position of an object (O) in the vehicle,
- Determining if said object is of a second object type (02) defined as a person and if said person or persons is about to exit said vehicle
- Communicating an activation signal to the vehicle illumination unit (170) to illuminate a peripheral area (A1) surrounding the vehicle in the vicinity of the position of the detected person or persons with a light having a second light characteristics if a person is about to exit said vehicle.

4. The method according to any of the above claims, further comprising:
- Communicating an activation signal to a communication device (180) to visualise presence of object (O) on a screen if an object (O) is detected.

5. A vehicle illumination system (100) for controlling the operation of a illumination unit (170), comprising a vehicle data collection and communication unit (130), a first detection unit (120A), a determination unit (160) and a vehicle illumination unit (170), said system being arranged to
- Receive, in the vehicle data collection and communication unit (130), an initiating signal declaring occurrence of an event
- Receive, in the vehicle data collection and communication unit (130), a first signal from the first detection unit (120A) indicating the presence and position of object or objects (O) in a peripheral area (Aₜₒₜ) surrounding the vehicle, up on the occurrence of the event **characterised in that** the vehicle illumination system (100) is further arranged to:
- Determine by the determination unit (160) the object characteristics, wherein if said object or objects (O) is/are of a first object type (O1) forming a part of a predefined road environment except a person or belonging within a group of obstacles or road irregularities having predefined characteristics, then Communicate, by the collection and communication unit (130), an activation signal to the vehicle illumination unit (170), to illuminate said object or objects (O) with a light having first light characteristics if the object or objects (O) detected is/are of the first object type (O1), and wherein if said object or objects (O) is of a second object type (02) defined as a person, then
- Communicate, by the collection and communication unit (130), an activation signal to the vehicle illumination unit (170) to illuminate said object or objects (O) with a light having second light characteristics if the object or objects (O) detected is/are of the second object type (O2).

6. The vehicle illumination system according to claim 5, further being arranged to
- Communicate, by the collection and communication unit (130), an activation signal to a communication device (180) to visualise presence of object (O, O1, O2) on a screen if an object (O, O1, O2) is detected.

7. A computer program comprising computer readable code means, which when run in the vehicle illumination system (100) of claim 5 or 6 cause the vehicle illumination system (100) to perform the method according to any of the claims 1-4.

8. A computer program product, comprising a computer readable medium and a computer program according to claim 7, wherein the computer program is stored on the computer readable medium.

9. Vehicle (270) comprising a vehicle illumination system (100) according to any of the previous claims 5 to 6,

## Patentansprüche

1. Verfahren, durchgeführt durch ein Fahrzeugbeleuchtungssystem (100) zum Steuern des Betriebs einer Fahrzeugbeleuchtungseinheit (170), wobei das Verfahren umfasst:
- Empfangen eines initiierenden Signals, das das Eintreten eines Ereignisses erklärt
- Empfangen eines ersten Signals von einer ersten Detektionseinheit (120A), das die Anwesenheit und Position eines Objekts oder von Objekten (O) in einem peripheren Bereich (Aₜₒₜ) um das Fahrzeug herum anzeigt, bei dem Eintreten des Ereignisses
**dadurch gekennzeichnet, dass** das Verfahren weiter umfasst:
- Bestimmen von Objektcharakteristiken: falls das Objekt oder die Objekte (O) von einem ersten Objekttyp (O1) ist/sind, bildend einen Teil einer vordefinierten Straßenumgebung außer einer Person oder gehörend in eine Gruppe von Hindernissen oder Straßenunregelmäßigkeiten mit vordefinierten Charakteristiken, dann
- Kommunizieren eines Aktivierungssignals an die Fahrzeugbeleuchtungseinheit (170) zum Beleuchten des Objekts oder der Objekte (O1) mit einem Licht mit einer ersten Lichtcharakteristik, falls das oder die detektierten Objekte (O) von dem ersten Objekttyp (O1) ist/sind,
das oder die Objekte (O) von einem als eine Person definierten zweiten Objekttyp (O2) ist/sind, dann
- Kommunizieren eines Aktivierungssignals an die Fahrzeugbeleuchtungseinheit (170) zum Beleuchten des Objekts oder der Objekte (O) mit einem Licht mit einer zweiten Lichtcharakteristik, falls das oder die detektierten Objekte (O) von dem zweiten Objekttyp (O2) ist/sind.

2. Verfahren nach Anspruch 1, weiter umfassend:
- Empfangen eines zweiten Signals von einer zweiten Detektionseinheit (120B), das die Intensität des Umgebungslichts anzeigt;
- Bestimmen, ob die Intensität des Umgebungslichts unter einem vordefinierten Wert liegt;
- Kommunizieren eines Aktivierungssignals an die Fahrzeugbeleuchtungseinheit (170) zum Beleuchten der detektierten Objekte (O, O1, O2) mit einem Licht mit einer dritten Lichtcharakteristik, falls die Intensität des Umgebungslichts unter dem vordefinierten Wert liegt.

3. Verfahren nach einem der obigen Ansprüche, weiter umfassend:
- Empfangen eines Signals von einer dritten Detektionseinheit (120C), das die Anwesenheit und Position eines Objekts (O) in dem Fahrzeug anzeigt,
- Bestimmen, ob das Objekt von einem als eine Person definierten zweiten Objekttyp (O2) ist und ob die Person oder Personen dabei sind, das Fahrzeug zu verlassen,
- Kommunizieren eines Aktivierungssignals an die Fahrzeugbeleuchtungseinheit (170) zum Beleuchten eines peripheren Bereichs (A1) um das Fahrzeug in der Nähe der Position der detektierten Person oder Personen mit einem Licht mit einer zweiten Lichtcharakteristik, falls eine Person dabei ist, das Fahrzeug zu verlassen.

4. Verfahren nach einem der obigen Ansprüche, weiter umfassend:
Kommunizieren eines Aktivierungssignals an eine Kommunikationseinrichtung (180) zum Visualisieren der Anwesenheit eines Objekts (O) auf einem Schirm, falls ein Objekt (O) detektiert wird.

5. Fahrzeugbeleuchtungssystem (100) zum Steuern des Betriebs einer Beleuchtungseinheit (170), umfassend eine Fahrzeugdatensammel- und -kommunikationseinheit (130), eine erste Detektionseinheit (120A), eine Bestimmungseinheit (160) und eine Fahrzeugbeleuchtungseinheit (170), wobei das System ausgelegt ist zum
- Empfangen, in der Fahrzeugdatensammel- und -kommunikationseinheit (130), eines initiierenden Signals, das das Eintreten eines Ereignisses erklärt
- Empfangen, in der Fahrzeugdatensammel- und -kommunikationseinheit (130), eines ersten Signals von der ersten Detektionseinheit (120A), das die Anwesenheit und Position eines Objekts oder von Objekten (O) in dem peripheren Bereich (Aₜₒₜ) um das Fahrzeug herum anzeigt, bei dem Eintreten des Ereignisses **dadurch gekennzeichnet, dass** das Fahrzeugbeleuchtungssystem (100) weiter ausgelegt ist zum:
- Bestimmen durch die Bestimmungseinheit (160) von Objektcharakteristiken, wobei, falls das Objekt oder die Objekte (O) von einem ersten Objekttyp (O1) ist/sind, bildend einen Teil einer vordefinierten Straßenumgebung außer einer Person oder gehörend in eine Gruppe von Hindernissen oder Straßenunregelmäßigkeiten mit vordefinierten Charakteristiken, dann
Kommunizieren, durch die Sammel- und Kommunikationseinheit (130), eines Aktivierungssignals an die Fahrzeugbeleuchtungseinheit (170) zum Beleuchten des Objekts oder der Objekte (O) mit einem Licht mit einer ersten Lichtcharakteristik, falls das oder die detektierten Objekte (O) von dem ersten Objekttyp (O1) ist/sind,
und wobei das oder die Objekte (O) von einem als eine Person definierten zweiten Objekttyp (O2) ist/sind, dann
- Kommunizieren, durch die Sammel- und Kommunikationseinheit (130), eines Aktivierungssignals an die Fahrzeugbeleuchtungseinheit (170) zum Beleuchten des Objekts oder der Objekte (O) mit einem Licht mit einer zweiten Lichtcharakteristik, falls das oder die detektierten Objekte (O) von dem zweiten Objekttyp (O2) ist/sind.

6. Fahrzeugbeleuchtungssystem nach Anspruch 5, weiter ausgelegt zum
- Kommunizieren, durch die Sammel- und Kommunikationseinheit (130), eines Aktivierungssignals an eine Kommunikationseinrichtung (180) zum Visualisieren der Anwesenheit eines Objekts (O, O1, O2) auf einem Schirm, falls ein Objekt (O, O1, O2) detektiert wird.

7. Computerprogramm umfassend computerlesbare Codemittel, die bei Ausführen in dem Fahrzeugbeleuchtungssystem (100) des Anspruchs 5 oder 6 bewirken, dass das Fahrzeugbeleuchtungssystem (100) das Verfahren nach einem der Ansprüche 1-4 durchführt.

8. Computerprogrammprodukt umfassend ein computerlesbares Medium und ein Computerprogramm nach Anspruch 7,
wobei das Computerprogramm auf einem computerlesbaren Medium gespeichert ist.

9. Fahrzeug (270) umfassend ein Fahrzeugbeleuchtungssystem (100) nach einem der vorhergehenden Ansprüche 5 bis 6.

## Revendications

1. Procédé réalisé par un système (100) d'éclairage de véhicule pour commander le fonctionnement d'une unité (170) d'éclairage de véhicule, ledit procédé comportant les étapes consistant à :
- recevoir un signal d'amorçage déclarant la survenue d'un événement,
- recevoir un premier signal en provenance d'une première unité (120A) de détection, indiquant la présence et la position d'un objet ou d'objets (O) dans une zone périphérique (Aₜₒₜ) entourant le véhicule, suite à la survenue de l'événement, **caractérisé en ce que** le procédé comporte en outre les étapes consistant à :
- déterminer des caractéristiques d'objets :
si ledit ou lesdits objets (O) sont d'un premier type d'objet (O1) faisant partie d'un environnement routier prédéfini à l'exception d'une personne ou appartenant à un groupe d'obstacles ou d'irrégularités de route présentant des caractéristiques prédéfinies,
- communiquer un signal d'activation à l'unité (170) d'éclairage de véhicule pour éclairer ledit ou lesdits objets (O1) avec une lumière présentant des premières caractéristiques de lumière si l'objet ou les objets (O) détectés sont du premier type d'objet (O1), si ledit ou lesdits objets (O) sont d'un deuxième type d'objet (O2) défini comme une personne,
- communiquer un signal d'activation à l'unité (170) d'éclairage de véhicule pour éclairer ledit ou lesdits objets (O) avec une lumière présentant des deuxièmes caractéristiques de lumière si l'objet ou les objets (O) détectés sont du deuxième type d'objet (O2).

2. Procédé selon la revendication 1, comportant en outre les étapes consistant à :
- recevoir un deuxième signal en provenance d'une deuxième unité (120B) de détection, indiquant l'intensité de la lumière ambiante
- déterminer si l'intensité de la lumière ambiante est inférieure à une valeur prédéfinie
- communiquer un signal d'activation à l'unité (170) d'éclairage de véhicule pour éclairer les objets détectés (O, O1, O2) avec une lumière présentant une troisième caractéristique de lumière si ladite intensité de la lumière ambiante est inférieure à la valeur prédéfinie.

3. Procédé selon l'une quelconque des revendications ci-dessus, comportant en outre les étapes consistant à :
- recevoir un signal en provenance d'une troisième unité (120C) de détection, indiquant la présence et la position d'un objet (O) dans le véhicule,
- déterminer si ledit objet est d'un deuxième type d'objet (O2) défini comme une personne et si ladite ou lesdites personnes s'apprêtent à sortir dudit véhicule
- communiquer un signal d'activation à l'unité (170) d'éclairage de véhicule pour éclairer une zone périphérique (A1) entourant le véhicule au voisinage de la position de la ou des personnes détectées avec une lumière présentant des deuxièmes caractéristiques de lumière si une personne s'apprête à sortir dudit véhicule.

4. Procédé selon l'une quelconque des revendications ci-dessus, comportant en outre l'étape consistant à :
- communiquer un signal d'activation à un dispositif (180) de communication pour visualiser la présence d'un objet (O) sur un écran si un objet (O) est détecté.

5. Système (100) d'éclairage de véhicule destiné à commander le fonctionnement d'une unité (170) d'éclairage, comportant une unité (130) de communication et de collecte de données de véhicule, une première unité (120A) de détection, une unité (160) de détermination et une unité (170) d'éclairage de véhicule, ledit système étant agencé pour
- recevoir, dans l'unité (130) de communication et de collecte de données de véhicule, un signal d'amorçage déclarant la survenue d'un événement
- recevoir, dans l'unité (130) de communication et de collecte de données de véhicule, un premier signal en provenance de la première unité (120A) de détection, indiquant la présence et la position d'un objet ou d'objets (O) dans une zone périphérique (Aₜₒₜ) entourant le véhicule, suite à la survenue de l'événement, **caractérisé en ce que** le système (100) d'éclairage de véhicule est en outre agencé pour :
- faire déterminer, par l'unité (160) de détermination, les caractéristiques d'objets,
si ledit ou lesdits objets (O) sont d'un premier type d'objet (O1) faisant partie d'un environnement routier prédéfini à l'exception d'une personne ou appartenant à un groupe d'obstacles ou d'irrégularités de route présentant des caractéristiques prédéfinies,
- faire communiquer, par l'unité (130) de communication et de collecte, un signal d'activation à l'unité (170) d'éclairage de véhicule, pour éclairer ledit ou lesdits objets (O) avec une lumière présentant des premières caractéristiques de lumière si l'objet ou les objets (O) détectés sont du premier type d'objet (O1), et
si ledit ou lesdits objets (O) sont d'un deuxième type d'objet (O2) défini comme une personne,
- faire communiquer, par l'unité (130) de communication et de collecte, un signal d'activation à l'unité (170) d'éclairage de véhicule pour éclairer ledit ou lesdits objets (O) avec une lumière présentant des deuxièmes caractéristiques de lumière si l'objet ou les objets (O) détectés sont du deuxième type d'objet (O2) .

6. Système d'éclairage de véhicule selon la revendication 5, celui-ci étant en outre agencé pour
- faire communiquer, par l'unité (130) de communication et de collecte, un signal d'activation à un dispositif (180) de communication pour visualiser la présence d'un objet (O, O1, O2) sur un écran si un objet (O, O1, O2) est détecté.

7. Programme d'ordinateur comportant des moyens de code lisible par ordinateur qui, lorsqu'ils sont exécutés dans le système (100) d'éclairage de véhicule selon la revendication 5 ou 6, amènent le système (100) d'éclairage de véhicule à réaliser le procédé selon l'une quelconque des revendications 1 à 4.

8. Produit de programme d'ordinateur, comportant un support lisible par ordinateur et un programme d'ordinateur selon la revendication 7, le programme d'ordinateur étant conservé sur le support lisible par ordinateur.

9. Véhicule (270) comportant un système (100) d'éclairage de véhicule selon l'une quelconque des revendications 5 à 6 qui précèdent.
